Europäisches Patentamt

European Patent Office

Office européen des brevets

(19)

(11)     EP 0 932 833 B1

(12)     EUROPÄISCHE PATENTSCHRIFT

(45) Veröffentlichungstag und Bekanntmachung des
Hinweises auf die Patenterteilung:
**29.05.2002   Patentblatt 2002/22**

(21) Anmeldenummer: 97912049.0

(22) Anmeldetag: **15.10.1997**

(51) Int Cl.⁷: **G01P 15/10**, G01C 19/56

(86) Internationale Anmeldenummer:
**PCT/DE97/02353**

(87) Internationale Veröffentlichungsnummer:
**WO 98/18011 (30.04.1998 Gazette 1998/17)**

(54) **VERFAHREN UND VORRICHTUNG ZUM MESSEN EINER PHYSIKALISCHEN GRÖSSE**

METHOD AND DEVICE FOR MEASURING A PHYSICAL QUANTITY

PROCEDE ET DISPOSITIF POUR MESURER UNE GRANDEUR PHYSIQUE

(84) Benannte Vertragsstaaten:
**DE FR GB**

(30) Priorität: **21.10.1996  DE 19643342**

(43) Veröffentlichungstag der Anmeldung:
**04.08.1999   Patentblatt 1999/31**

(73) Patentinhaber: **ROBERT BOSCH GMBH**
**70442 Stuttgart (DE)**

(72) Erfinder:
• **FUNK, Karsten**
  **D-70195 Stuttgart (DE)**
• **KULCKE, Hans-Martin**
  **D-71032 Böblingen (DE)**
• **LÄRMER, Franz**
  **D-70437 Stuttgart (DE)**
• **SCHILP, Andrea**
  **D-73525 Schwäbisch Gmünd (DE)**

(56) Entgegenhaltungen:
EP-A- 0 786 645          WO-A-94/28427
WO-A-96/34255          DE-A- 3 630 368
DE-A- 4 424 635          DE-A- 19 547 184
DE-A- 19 642 893          US-A- 4 019 391

**Beschreibung**

Die Erfindung betrifft ein Verfahren zum Messen einer physikalischen Größe nach dem Anspruch 1 und eine Vorrichtung zum Messen einer physikalischen Größe nach dem Anspruch 8.

Stand der Technik

Es sind beispielsweise aus DE 44 25 635 A1 Verfahren und Vorrichtungen bekannt, bei denen eine in Resonanz schwingende Struktur vorgesehen ist, deren Schwingfrequenz infolge einer Änderung der zu messenden physikalischen Größe variiert. Die Änderung der Schwingfrequenz der Struktur wird dann mit Auswertemitteln erfasst und ergibt ein frequenzanaloges Signal, das auf die Größe der einwirkenden, zu messenden physikalischen Größe schließen lässt. Die in Resonanz schwingende Struktur wird hierbei von einem Feder-Masse-System gebildet, wobei eine Empfindlichkeit von den geometrischen Abmessungen der in Resonanz schwingenden Struktur abhängt. Zur Auswertung der Eigenfrequenzverschiebung der schwingenden Struktur ist diese als frequenzbestimmendes Element einer elektronischen Oszillatorschaltung geschaltet. Die Auflösung hängt im Wesentlichen vom Signal-Rausch-Abstand der Oszillatorschaltung und vom verwendeten Frequenzmessverfahren ab. Im Zuge einer angestrebten Miniaturisierung derartiger Messvorrichtungen im Interesse einer kostengünstigen Fertigung ist jedoch nachteilig, dass hierdurch eine Verschlechterung der Empfindlichkeit beziehungsweise der Auflösung eintritt.

Aus der nicht vorveröffentlichten Schrift WO 97/22864 ist ein Kraftsensor, insbesondere ein Beschleunigungssensor oder Drucksensor, mit einer in Resonanz schwingenden Struktur bekannt, deren Schwingfrequenz infolge einer zu detektierenden Krafteinwirkung veränderlich ist. Weiter ist dort vorgesehen, dass durch Anlegen einer elektrischen Spannung ein Abstand eines Arbeitspunktes des Kraftsensors zu einem Punkt einer mechanischen Instabilität einstellbar ist.

Schließlich wird dort eine durch eine Änderung der zu messenden physikalischen Größe eintretende Änderung der Schwingfrequenz der schwingenden Struktur erfasst und ein frequenzanaloges Signal bereit gestellt, wobei die mit der Resonanzfrequenz schwingende Struktur mit einer zusätzlichen, von einer Antriebseinrichtung zur Erzeugung der Resonanzschwingung der Struktur getrennten elektrostatischen Kraft beaufschlagt wird.

Vorteile der Erfindung

Das erfindungsgemäße Verfahren mit den im Anspruch 1 genannten Merkmalen und die erfindungsgemäße Messvorrichtung mit den in Anspruch 8 genannten Merkmalen bieten dem gegenüber den Vorteil, dass auch bei Messvorrichtungen mit kleiner Dimensionierung die Messempfindlichkeit erhöht werden kann. Dadurch, dass die mit ihrer Resonanzfrequenz schwingende Struktur mit einer vorzugsweise in der Schwingungsrichtung wirkenden elektrostatischen Kraft beaufschlagt wird, ist es vorteilhaft möglich, über die die elektrostatische Kraft bestimmenden Größen Einfluss auf die Empfindlichkeit der Messvorrichtung zu nehmen. So kann vorzugsweise über die die elektrostatische Kraft mitbestimmende Spannung, die zwischen der in Resonanz schwingenden Struktur und der dieser zugeordneten, beweglich gelagerten Gegenstruktur angelegt wird, ein Arbeitspunkt der

Meßvorrichtung eingestellt werden. Je größer die Spannung gewählt wird, um so näher rückt der Arbeitspunkt an den Punkt der mechanischen Instabilität der Meßvorrichtung heran.

Über die Höhe der während des Meßvorganges konstant bleibenden Spannung kann so sehr vorteilhaft die Empfindlichkeit der Meßvorrichtung eingestellt werden. Entsprechend der über die Spannung eingestellten Empfindlichkeit kann sehr vorteilhaft über die beweglich gelagerte Gegenstruktur, die auf die in Resonanz schwingende Struktur einwirkende elektrostatische Kraft variiert werden, so daß diese infolge der konstanten Spannung ausschließlich von der Abstandsänderung abhängig ist.

Durch die Änderung des Abstandes der Struktur und der Gegenstruktur zueinander, die vorzugsweise in unmittelbarem Zusammenhang mit der zu messenden physikalischen Größe steht, kann eine Eigenfrequenzverschiebung der schwingenden Struktur erreicht werden. Diese Eigenfrequenzverschiebung ist bei einer gleichgroßen zu messenden physikalischen Größe um so größer, je näher der Arbeitspunkt der Meßeinrichtung an den Punkt der mechanischen Instabilität über die Größe der konstanten Spannung herangelegt ist. So führen bereits sehr kleine Änderungen der zu messenden physikalische Größe zu einer relativ hohen Eigenfrequenzverschiebung (Resonanzfrequenzverschiebung), die mit den Auswertemitteln entsprechend ausgewertet werden können. Hierbei genügen bereits geringste geometrische Verschiebungen, das heißt, Abstandsänderungen der Struktur zur Gegenstruktur, um relevante Frequenzunterschiede hervorzurufen.

In bevorzugter Ausgestaltung der Erfindung ist vorgesehen, daß die die elektrostatische Kraft hervorrufende Gegenstruktur ein beweglich gelagerter Bestandteil eines Kraftsensors, insbesondere eines Beschleunigungssensors, ist. Vorzugsweise sind hierbei die Struktur und die Gegenstruktur in einem Winkel zu einer Sensierungsrichtung des Beschleunigungssensors angeordnet. Hierdurch wird es vorteilhaft möglich, eine Rückwirkung der elektrostatischen Kraft auf die Gegenstruktur zu verringern und insgesamt die Meßgenauigkeit der erfindungsgemäßen Meßvorrichtung zu erhöhen. Weiterhin kann sehr vorteilhaft durch die Winkelversetzung eine zu detektierende Auslenkung einer seismischen Masse des Beschleunigungssensors heruntergeteilt werden, so daß eine exaktere Messung möglich wird.

Weitere vorteilhafte Ausgestaltungen ergeben sich aus den übrigen, in den abhängigen Ansprüchen genannten Merkmalen.

Zeichnungen

Die Erfindung wird nachfolgend in Ausführungsbeispielen an Hand der zugehörigen Zeichnungen näher erläutert. Es zeigen:

Figur 1    eine schematische Draufsicht auf eine Grundstruktur einer erfindungsgemäßen Meßvorrichtung;

Figur 2    eine Frequenz-Spannungs-Kennlinie der Vorrichtung gemäß Figur 1;

Figur 3    eine Frequenz-Abstands-Kennlinie der Vorrichtung gemäß Figur 1 und

Figur 4    eine schematische Draufsicht auf einen Beschleunigungssensor mit der erfindungsgemäßen Meßvorrichtung.

Beschreibung der Ausführungsbeispiele

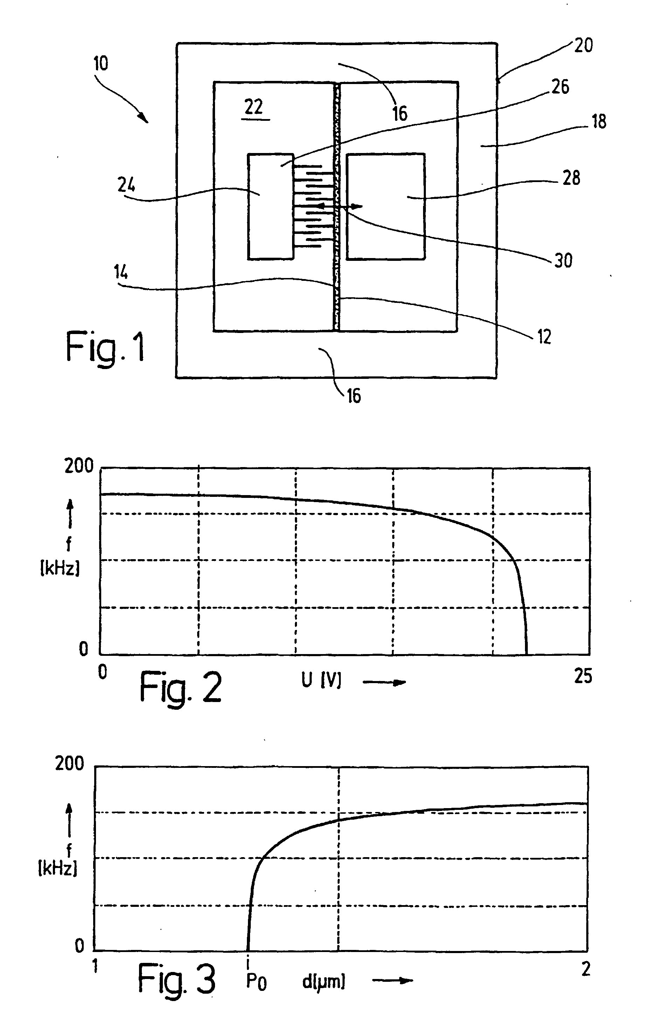

Figur 1 zeigt eine allgemein mit 10 bezeichnete Meßvorrichtung. Die Meßvorrichtung 10 ist lediglich schematisch in einer Draufsicht dargestellt und soll das erfindungsgemäße Meßverfahren verdeutlichen. Die Meßvorrichtung 10 besitzt eine Struktur 12, die von einem Biegebalken 14 gebildet wird, der zwischen zwei Lagern 16 beweglich eingespannt ist. Die Lager 16 können Bestandteil eines Rahmens 18 sein, der Bestandteil eines hier nicht näher dargestellten Substrats 20 ist. Der Biegebalken 14 überspannt hierbei ein von dem Rahmen 18 gebildetes Fenster 22. Der Struktur 12 ist eine Antriebseinrichtung 24 zugeordnet, die beispielsweise von einem elektrostatischen Kammantrieb 26 gebildet wird. Die Antriebseinrichtung 24 weist ferner eine hier nicht näher gezeigte elektronische Oszillatorschaltung auf. Der Struktur 12 ist weiterhin eine Gegenstruktur 28 zugeordnet, die an der der Antriebseinrichtung 24 gegenüberliegenden Seite des Biegebalkens 14 angeordnet ist. Die Gegenstruktur 28 ist in der hier mit einem Doppelpfeil 30 angegebenen Schwingungsrichtung des Biegebalkens 14 beweglich gelagert. Sowohl die Struktur 12 als auch die Gegenstruktur 28 sind in in Figur 1 nicht gezeigter Weise mit einer Gleichspannungsquelle verbunden, wobei die Struktur 12 mit dem Minuspol beziehungsweise Masse der Gleichspannungsquelle und die Gegenstruktur 28 mit dem Pluspol der Gleichspannungsquelle verbunden ist oder umgekehrt (Polarität unwichtig).

Die in Figur 1 gezeigte Meßvorrichtung 10 übt folgende Funktionen aus:

Über die Antriebseinrichtung 24 wird die Struktur 12 in ihrer Schwingungsrichtung 30 in eine resonante Schwingung mit einer Resonanzfrequenz $f_0$ (ohne äußere Belastung) versetzt. Wirkt nunmehr auf diese mit der Resonanzfrequenz $f_0$ schwingende Struktur 12 (Biegebalken 14) eine äußere physikalische Größe, beispielsweise eine Beschleunigung oder ein Druck, werden in die Struktur 12 mechanische Spannungen eingekoppelt, die zu einer Eigenfrequenzverschiebung der Resonanzfrequenz f führen, mit der die Struktur 12 schwingt. Durch Erfassen der Frequenzverschiebung zwischen der Resonanzfrequenz f und der Resonanzfrequenz $f_0$ kann in einem frequenzanalogen Meßverfahren auf die Größe der einwirkenden physikalischen Größe geschlossen werden. Die Empfindlichkeit des Meßverfahrens hängt hierbei im Wesentlichen von den geometrischen Abmessungen der Struktur 12 ab. Für die reine Biegeschwingung des Biegebalkens 14 gilt hierbei:

$$f = f_0 \cdot \sqrt{1 - \frac{3 \cdot F}{\pi^2 \cdot E} \cdot \frac{l^2}{b^3 \cdot h}}$$

wobei sich die Resonanzfrequenz $f_0$ gemäß

$$f_0 = \frac{4{,}73^2 \cdot b}{2\pi \cdot l^2} \cdot \sqrt{\frac{E}{12 \cdot \zeta}}$$

errechnet. Die Resonanzfrequenz $f_0$ gilt für den unbelasteten Zustand der Struktur 12. F ist die an die Struktur 12 angelegte Kraft, E das Elastizitätsmodul und $\zeta$ die Dichte des verwendeten Materials (Materialkonstante) des Biegebalkens 14. Mit l ist die Länge, mit b die Breite in Schwingungsrichtung 30 und h die Höhe des Biegebalkens 14 angegeben.

Durch Verbinden der Struktur 12 und der Gegenstruktur 28 mit der Gleichspannungsquelle wird von der Gegenstruktur 28 eine elektrostatische Kraft $F_E$ auf die im Ruhezustand mit der Resonanzfrequenz $f_0$ schwingenden Struktur 12 ausübt. Durch das Einwirken der elektrostatischen Kraft $F_E$ auf die Struktur 12 kann das Schwingungsverhalten gezielt beeinflußt werden. Hierbei errechnet sich die elektrostatische Kraft $F_E$ nach:

$$F_E = \frac{1}{2} \cdot \varepsilon \cdot h_E \cdot \frac{U^2}{d^2}$$

Mit $\varepsilon$ sind hier die Dielektrizitätskonstante, mit $l_E$ die Länge der Gegenstruktur 28, mit $h_E$ die Höhe der Gegenstruktur 28 bezeichnet, die der Struktur 12 direkt gegenüber liegen. Die zwischen der Struktur 12 und der Gegenstruktur 28 angelegt Spannung ist mit U bezeichnet, während d der Abstand der Struktur 12 von der Gegenstruktur 28 bezeichnet.

Die mechanische Federkraft der Struktur 12 (Biegebalken 14), die die sich ergebenden Resonanzfrequenzen f mitbestimmt, wird durch die elektrostatische Kraft $F_E$ überlagert, so dass sich die effektive Federsteifigkeit $c_{eff}$ der Struktur 12 verändert. Diese Änderung der effektiven Federsteifigkeit wirkt auf die Resonanzfrequenz f zurück, wobei folgende Beziehung gilt:

$$f = f_0 \sqrt{\frac{c_{eff}}{c_0}}$$

Die effektive Federsteifigkeit $c_{eff}$ bei einer Spannung U=0 ist mit $c_0$ bezeichnet.

Insgesamt ergibt sich also, dass die elektrostatische Kraft F und somit die Resonanzfrequenz f der Struktur 12 durch eine Größe der Spannung U und eine Größe des Abstandes d beeinflusst werden kann. Die Struktur 12 und die Gegenstruktur 28 bilden hierbei quasi einen Kondensator, wobei die Struktur 12 und die Gegenstruktur 28 die Kondensatorplatten darstellen. Die anderen Größen, wie die Länge l, die Breite b und die Höhe h der Struktur 12 und die Länge $l_E$ und die Höhe $h_E$ der Gegenstruktur 28 sind durch das Design der Meßvorrichtung 10 vorgegeben und fest.

In der Figur 2 ist die Resonanzfrequenz-Spannungs-Kennlinie der Meßvorrichtung 10 bei angenommenem festen Abstand d der Struktur 12 von der Gegenstruktur 28 dargestellt. Es wird deutlich, daß mit steigender Spannung U die Resonanzfrequenz f abfällt. Über die Spannung U kann ein Arbeitspunkt der Meßvorrichtung 10, insbesondere ein Abstand des Arbeitspunktes von einem Punkt der mechanischen Instabilität der Struktur 12 der Meßvorrichtung 10 eingestellt werden. Je näher der Arbeitspunkt an den Punkt der mechanischen Instabilität gelegt wird kann die Empfindlichkeit der Meßvorrichtung 10 erhöht werden, da hier schon geringere Abweichungen der Resonanzfrequenz f auf Grund einer von außen angreifenden, zu messenden physikalischen Größe zu einer höheren Signalabweichung führen.

In der Figur 3 ist eine Resonanzfrequenz-Abstands-Kennlinie der Meßvorrichtung 10 dargestellt. Es wird deutlich, daß mit geringer werdendem Abstand d zwischen der Struktur 12 und der Gegenstruktur 28 die Resonanzfrequenz f abfällt. Die Resonanzfrequenz f wird hierbei durch die Resonanzfrequenz $f_0$, die der Schwingungsfrequenz der Struktur 12 im unbelasteten Zustand entspricht, einerseits und dem Wert 0 andererseits begrenzt. Die Resonanzfrequenz f nimmt den Wert 0 an, wenn die elektrostatische Kraft $F_E$ genau der rücktreibenden Kraft des Biegebalkens 14 entspricht, so daß die Summe der Kräfte am Biegebalken gleich 0 wird. In dem Punkt, wo die Resonanzfrequenz f den Wert 0 annimmt, liegt der Punkt $P_0$ der mechanischen Instabilität der Meßvorrichtung 10.

Für den eigentlichen Meßvorgang wird zwischen der Struktur 12 und der Gegenstruktur 28 eine konstante Spannung U angelegt. Je größer diese Spannung U gewählt wird, um so näher rückt der Arbeitspunkt der Meßvorrichtung 10 an den Punkt $P_0$ der mechanischen Instabilität heran, und um so größer ist eine Verschiebung der Resonanzfrequenz f bei gegebener Änderung des Abstandes d der Struktur 12 und der Gegenstruktur 28 zueinander. Auf Grund der konstanten Spannung U ist die elektrostatische Kraft $F_E$ nur noch vom Abstand d abhängig. Eine Änderung des Abstandes d entspricht hierbei einer Bewegung auf der in Figur 3 gezeigten Kurve. Je näher man an den Punkt $P_0$ der mechanischen Instabilität herankommt, um so weicher wird die Struktur 12 und um so niedriger die Resonanzfrequenz f. Gleichzeitig wächst die Steilheit der Kurve und damit die Empfindlichkeit gegenüber einer geometrischen Änderung des Abstandes d. Hier genügen bereits geringste geometrische Verschiebungen, um relevante Unterschiede der Resonanzfrequenz f hervorzurufen. Die Erhöhung der Empfindlichkeit der Meßvorrichtung 10 ist hierbei lediglich dadurch begrenzt, daß die Struktur 12 zum Erfassen einer Änderung der Resonanzfrequenz f selber noch schwingen muß.

Die Schwingung der Struktur 12 führt zu einer zusätzlichen Variation des Abstandes d zwischen der Struktur

12 und der Gegenstruktur 28. Je geringer also die Amplitude der Schwingungen sein kann, die im wesentlichen vom Wirkungsgrad der Antriebseinrichtung 24 abhängen, um so näher kann der Arbeitspunkt und damit die Empfindlichkeit an dem Punkt $P_0$ der mechanischen Instabilität herangeschoben werden. Die sich auf Grund der Schwingung der Struktur 12 und der damit sich ergebenden Variation des Abstandes d ergebende Nichtlinearität der Kennlinie wird in hier nicht näher zu betrachtender Weise in einer Auswerteschaltung elektronisch kompensiert.

Insgesamt ergibt sich somit also, daß eine Veränderung der Resonanzfrequenz f nicht über eine Änderung der mechanischen Spannungen in der Struktur 12 (Biegebalken 14) bewirkt wird. Sich auf Grund der mechanischen Beeinflussung der Struktur 12 ergebende Schichtspannungen haben somit auf das Meßergebnis keinen Einfluß, da sie lediglich eine Ruhefrequenzverschiebung (Nullpunktverschiebung) bewirken.

Nach einem konkreten Ausführungsbeispiel ergeben sich bei einer konstanten Spannung U von 18 V, einer Länge l der Struktur 12 von 300 μm folgende Abhängigkeit der Resonanzfrequenz f, vom Abstand d der Struktur 12 von der Gegenstruktur 28. Der Abstand d ist hierbei als theoretischer Plattenabstand angenommen, da durch die elektrostatische Kraft $F_E$ der Abstand zwischen der Ruhelage, das heißt des Mittelpunktes der Schwingung 30 der Struktur 12 und der Gegenstruktur 28 geringer ist.

| Abstand d | 1,4 μm | 1,5 μm | 1,6 μm |
|---|---|---|---|
| Resonanzfrequenz f | 125,4 KHz | 141,7 KHz | 149,7 KHz |

An Hand der konkreten Zahlen wird deutlich, daß mit geringer werdendem Abstand d die Resonanzfrequenz f deutlich absinkt, und somit auf Grund einer zu messenden von außen angreifenden physikalischen Größe hervorgerufene Änderungen der Resonanzfrequenz f zu höheren Verschiebungen der Resonanzfrequenz f führen.

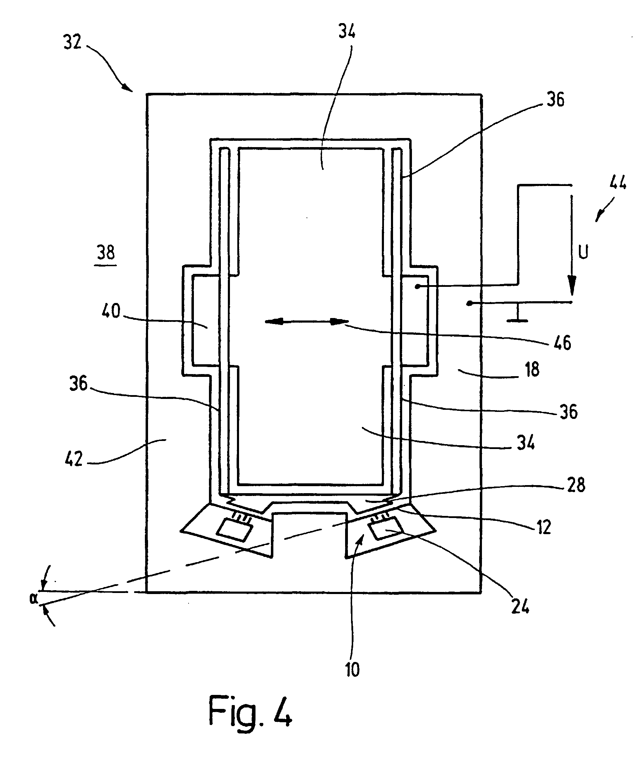

In der Figur 4 ist in einer schematischen Draufsicht eine mögliche Verwendungsform der Meßvorrichtung 10 gezeigt. Insgesamt ist hier ein mit 32 bezeichneter Beschleunigungssensor dargestellt. Gleiche Teile wie in Figur 1 sind mit gleichen Bezugszeichen versehen und nicht nochmals erläutert. Der Beschleunigungssensor 32 weist eine seismische Masse 34 auf, die über Federn 36 in einer planaren Schwingungsebene 38 weich aufgehängt ist. Die Federn 36 sind mit einem Fuß 40 auf dem Substrat 42 einerseits und der seismischen Masse 34 andererseits verbunden. Die Federn 36 sind weiterhin mit der Gegenstruktur 28 verbunden. Die Gegenstruktur 28 ist wiederum Bestandteil der Meßvorrichtung 10 (Figur 1), die ferner die Struktur 12 und die Antriebseinrichtung 24 aufweist. Die Gegenstruktur 28 ist über die Federn 36 mit der seismischen Masse 34 gekoppelt. Über die Federn 36 und dem Fuß 40 ist die Gegenstruktur 28 mit dem Pluspol einer Gleichspannungsquelle 44 verbunden. Die Struktur 12 ist über den Rahmen 18 beziehungsweise das Substrat 42 mit dem Minuspol beziehungsweise der Masse der Gleichspannungsquelle 44 verbunden. Bei eingeschalteter Gleichspannungsquelle 44 liegt somit die Spannung U zwischen der Gegenstruktur 28 und der Struktur 12 an. Die Meßvorrichtung 10 ist hierbei in einem Winkel α zu einer Sensitivitätsrichtung 46 des Beschleunigungssensors 32 angeordnet.

Der in Figur 4 gezeigte Beschleunigungssensor 32 übt folgende Funktion aus:

Bei seinem bestimmungsgemäßen Einsatz wird die seismische Masse 34 auf Grund einer von außen angreifenden Beschleunigung in der Sensitivitätsrichtung 46 in eine planare Schwingung in der planaren Schwingungsebene 38 versetzt. Die Beschleunigung ruft an der seismischen Masse 34 eine Kraft hervor, die je nach Federkonstante der Federn 36, an denen die seismische Masse 34 aufgehängt ist, zu einer Auslenkung mit einer bestimmten Amplitude führt. Durch die Anordnung der Federn 36 wird diese Auslenkung über die Hebelwirkung der Federn 36 herabgeteilt, so daß die Gegenstruktur 28 eine entsprechend verminderte Auslenkung (Änderung des Abstands d) erfährt.

In Abhängigkeit des Winkels α, in dem die Struktur 12 zu der Sensitivitätsrichtung 46 des Beschleunigungssensors 32 angeordnet ist, wird die Auslenkung ein weiteres Mal herabgeteilt, so daß schließlich eine Auslenkung der seismischen Masse 46 zu einer sehr viel kleineren Änderung des Abstandes d führt. Wie bereits zu den Figuren 1 bis 3 erläutert, führt die Änderung des Abstandes d bei einer konstant anliegenden Spannung U zu einer Variation der Resonanzfrequenz f, mit der die Struktur 12 durch die Antriebseinrichtung 24 angeregt ist. Die Änderung der Resonanzfrequenz f kann über ein hier nicht dargestelltes Auswertemittel erfaßt und ein frequenzanaloges Signal ermittelt werden, das der Größe der angreifenden Beschleunigung entspricht.

Durch die Schrägstellung der Struktur 12 in dem Winkel α wird einerseits erreicht, daß die Möglichkeit besteht, für die seismische Masse 34 einen Überlastanschlag zu realisieren. Die seismische Masse 34 kann mit einer Amplitude in ihrer Sensitivitätsrichtung 46 schwingen, die durch einen nicht dargestellten Überlastanschlag begrenzt wird. Selbst bei maximaler Amplitude würde auf Grund der Herunterteilung der Auslenkung einerseits über die Federn 36 und andererseits über die Schrägstellung in dem Winkel α verhindert, daß die Gegenstruktur 28 an die Struktur 12 anschlägt.

Ein weiterer Vorteil in der Anordnung der Struktur 12 und dem Winkel α besteht darin, daß eine Rückwirkung der elektrostatischen Kraft $F_E$ auf die Gegenstruktur 28 vermindert werden kann. Hierbei wirkt nur noch der Anteil der elektrostatischen Kraft $F_E$ auf die Bewegungsrichtung der Gegenstruktur 28, der dem Sinus des Winkels α entspricht.

Durch die an Hand der Beispiele erläuterten Beeinflussung der Resonanzfrequenz f auf Grund der auf die Struktur 12 einwirkenden Kraft $F_E$, die ausschließlich auf eine Änderung des Abstandes d zurückgeht, wird ein kapazitives Meßverfahren mit frequenzanaloger Auswertung geschaffen, das es gestattet Meßvorrichtungen 10 zu schaffen, die eine hohe Empfindlichkeit aufweisen und gleichzeitig einfach und robust aufgebaut sind.

**Patentansprüche**

1. Verfahren zum Messen einer physikalischen Größe, bei dem eine Struktur (12) über eine Antriebseinrichtung (24) in resonante Schwingungen versetzt und eine infolge einer Änderung der zu messenden physikalischen Größe eintretende Änderung der Schwingungsfrequenz der Struktur (12) erfasst und ein frequenzanaloges Signal bereitgestellt wird, und wobei die schwingende Struktur (12) über eine beweglich gelagerte Gegenstruktur (28) mit einer von der Antriebseinrichtung (24) getrennten elektrostatischen Kraft ($F_E$) beaufschlagt wird.

2. Verfahren nach Anspruch 1, bei dem die elektrostatische Kraft ($F_E$) verändert wird.

3. Verfahren nach Anspruch 1 oder 2, bei dem der Struktur (12) die Gegenstruktur (28) zugeordnet wird, und dass zwischen der Struktur (12) und der Gegenstruktur (28) eine konstante Spannung (U) angelegt und ein Abstand (d) der Struktur (12) zu der Gegenstruktur (28) verändert wird.

4. Verfahren nach einem der vorangehenden Ansprüche, bei dem sich über eine Änderung des Abstandes (d) der Struktur (12) von der beweglich gelagerten Gegenstruktur (28) die Resonanzfrequenz (f) der schwingenden Struktur (12) ändert.

5. Verfahren nach Anspruch 3, bei der über eine Höhe der konstanten Spannung (U) ein Abstand eines Arbeitspunktes von einem Punkt ($P_0$) der mechanischen Instabilität eingestellt wird.

6. Verfahren nach einem der vorangehenden Ansprüche, bei welchem der Abstand (d) zwischen der Struktur (12) und der Gegenstruktur (28) durch die Einwirkung der zu messenden physikalischen Größe verändert wird.

7. Verfahren nach einem der vorangehenden Ansprüche, bei dem die Struktur (12) und die Gegenstruktur (28) in einem Winkel ($\alpha$) zu einer Sensierungsrichtung (46) angeordnet werden, so dass sich die Rückwirkung der elektrostatischen Kraft ($F_E$) auf die Gegenstruktur (28) verringert.

8. Messvorrichtung zum Messen einer physikalischen Größe mit einer in Resonanz schwingenden Struktur (12), einer Antriebseinrichtung (24) zur Erzeugung der Resonanzschwingungen der Struktur (12) und Auswertemitteln zum Erfassen der Schwingungsfrequenz der Struktur (12), wobei der Struktur (12) eine beweglich gelagerte Gegenstruktur (28) zugeordnet ist, und wobei die Struktur (12) und die Gegenstruktur (28) mit einer Spannungsquelle (44) verbunden sind, so dass die Gegenstruktur (28) eine von der Antriebseinrichtung (24) getrennte elektrostatische Kraft ($F_E$) auf die Struktur (12) hervorruft.

9. Messvorrichtung nach Anspruch 8, bei der über die Spannungsquelle (44) zwischen der Struktur (12) und der Gegenstruktur (28) eine konstante Spannung (U) angelegt ist.

10. Messvorrichtung nach Anspruch 8 oder 9, bei der die vor der Gegenstruktur (28) hervorgerufene elektrostatische Kraft ($F_E$) in Schwingungsrichtung (30) der Struktur (12) wirkt.

11. Messvorrichtung nach einem der Ansprüche 8 bis 10, bei der die Gegenstruktur (28) ein beweglich gelagerter Bestandteil eines Kraftsensors, insbesondere eines Beschleunigungssensors (32), ist.

12. Messvorrichtung nach Anspruch 11, bei der die Struktur (12) und die Gegenstruktur (28) in einem Winkel ($\alpha$) zu einer Sensierungsrichtung (46) des Beschleunigungssensors (32) angeordnet sind.

**Claims**

1. Method for measuring a physical quantity, in which a structure (12) is set in resonant vibration via a drive device (24) and a change in the vibrational frequency of the structure (12) occurring as a consequence of a change in the physical quantity to be measured is detected and a frequency-analogue signal is provided, and an electrostatic force ($F_E$) separate from the drive device (24) is applied to the vibrating structure (12) via a movably mounted mating structure (28).

2. Method according to Claim 1, in which the electrostatic force ($F_E$) is varied.

3. Method according to Claim 1 or 2, in which the structure (12) is assigned to the mating structure (28) and in which a constant voltage (U) is applied between the structure (12) and the mating structure (28) and a spacing (d) of the structure (12) from the mating structure (28) is varied.

4. Method according to one of the preceding claims, in which the resonant frequency (f) of the of the vibrating structure (12) changes via a change in the spacing (d) of the structure (12) from the movably mounted mating structure (28).

5. Method according to Claim 3, in which a spacing of an operating point from a point ($P_0$) of the mechanical instability is set via a level of the constant voltage (U).

6. Method according to one of the preceding claims, in which the spacing (d) between the structure (12) and the mating structure (28) is varied by the effect of the physical quantity to be measured.

7. Method according to one of the preceding claims, in which the structure (12) and the mating structure (28) are arranged at an angle ($\alpha$) to a sensing direction (46) such that the reaction of the electrostatic force ($F_E$) on the mating structure (28) is reduced.

8. Measuring device for measuring a physical quantity, having a structure (12) vibrating in resonance, a drive device (24) for generating the resonant vibrations of the structure (12), and evaluation means for detecting the vibrational frequency of the structure (12), the structure (12) being assigned a movably mounted mating structure (28), and the structure (12) and the mating structure (28) being connected to a voltage source (44) such that the mating structure (28) gives rise on the structure (12) to an electrostatic force ($F_E$) separate from the drive device (24).

9. Measuring device according to Claim 8, in which a constant voltage (U) is applied between the structure (12) and the mating structure (28) via the voltage source (44).

10. Measuring device according to Claim 8 or 9, in which the electrostatic force ($F_E$) caused by the mating structure (28) acts in the vibrational direction (30) of the structure (12).

11. Measuring device according to one of Claims 8 to 10, in which the mating structure (28) is a movably mounted constituent of a force sensor, in particular an acceleration sensor (32).

12. Measuring device according to Claim 11, in which the structure (12) and the mating structure (28) are arranged at an angle ($\alpha$) to a sensing direction (46) of the acceleration sensor (32).

**Revendications**

1. Procédé de mesure d'une grandeur physique selon lequel on fait osciller une structure (12) en résonance par l'intermédiaire d'une installation d'entraînement (24) et on détecte une variation de la fréquence d'oscillation de la structure (12) produite par une variation de la grandeur physique à mesurer et on fournit un signal analogue à la fréquence, et
on sollicite la structure oscillante (12) avec une structure opposée (28) montée mobile, avec une force électrostatique ($F_E$) distincte de celle engendrée par l'installation d'entraînement (24).

2. Procédé selon la revendication 1, selon lequel on modifie la force électrostatique ($F_E$).

3. Procédé selon l'une quelconque des revendications 1 ou 2,
**caractérisé en ce qu'**
on associe la structure opposée (28) à la structure (12) et entre la structure (12) et la structure opposée (28) on applique une tension constante (U) et on modifie la distancé (d) entre la structure (12) et la structure opposée (28).

**4.** Procédé selon l'une quelconque des revendications précédentes,
selon lequel
en modifiant la distance (d) entre la structure (12) et la structure opposée (28) montée mobile, on modifie la fréquence de résonance (f) de la structure oscillante (12).

**5.** Procédé selon la revendication 3,
selon lequel
on règle la distance du point de fonctionnement par rapport à un point $(P_0)$ d'instabilité mécanique à l'aide de la valeur de la tension constante (U).

**6.** Procédé selon l'une quelconque des revendications précédentes,
selon lequel,
la distance (d) entre la structure (12) et la structure opposée (28) est modifiée par l'action de la grandeur physique à mesurer.

**7.** Procédé selon l'une quelconque des revendications précédentes,
selon lequel
on dispose la structure (12) et la structure opposée (28) suivant un angle ($\alpha$) par rapport à la direction de détection (46) pour réduire la réaction de la force électrostatique ($F_E$) sur la structure opposée (28).

**8.** Dispositif de mesure pour mesurer une grandeur physique avec une structure oscillant en résonance (12), comprenant une installation d'entraînement (24) pour générer les oscillations de résonance de la structure (12) et des moyens d'exploitation pour saisir la fréquence d'oscillation de la structure (12),
la structure (12) étant associée à une structure opposée (28) montée mobile, et
la structure (12) et la structure opposée (28) sont reliées à une source de tension (44) pour que la structure opposée (28) produise sur la structure (12) une force électrostatique ($F_E$) distincte de la force de l'installation d'entraînement (24).

**9.** Dispositif de mesure selon la revendication 8,
dans lequel
on applique une tension constante (U) par la source de tension (44) entre la structure (12) et la structure opposée (28).

**10.** Dispositif de mesure selon l'une quelconque des revendications 8 ou 9,
dans lequel
la force électrostatique ($F_E$) produite par la structure opposée (28) agit dans la direction d'oscillation (30) de la structure (12).

**11.** Dispositif de mesure selon l'une quelconque des revendications 8 à 10,
dans lequel
la structure opposée (28) est une partie montée mobile d'un capteur de force notamment d'un capteur d'accélération (32).

**12.** Dispositif de mesure selon la revendication 11,
dans lequel
la structure (12) et la structure opposée (28) font un angle ($\alpha$) par rapport à la direction de détection (46) du capteur d'accélération (32).

Fig. 1

Fig. 2

Fig. 3

Fig. 4